(19) Europäisches Patentamt
European Patent Office
Office européen des brevets

(11) EP 1 744 629 B1

(12) EUROPÄISCHE PATENTSCHRIFT

(45) Veröffentlichungstag und Bekanntmachung des Hinweises auf die Patenterteilung:
**05.12.2012 Patentblatt 2012/49**

(21) Anmeldenummer: **05734026.7**

(22) Anmeldetag: **23.04.2005**

(51) Int Cl.:
***A01N 43/653*** (2006.01) ***A01N 43/40*** (2006.01)
***A01N 37/50*** (2006.01) ***A01N 43/88*** (2006.01)
***A01N 47/24*** (2006.01) ***A01P 3/00*** (2006.01)

(86) Internationale Anmeldenummer:
**PCT/EP2005/004387**

(87) Internationale Veröffentlichungsnummer:
**WO 2005/104847 (10.11.2005 Gazette 2005/45)**

(54) **FUNGIZIDE MISCHUNGEN**

FUNGICIDAL MIXTURES

MELANGES FONGICIDES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.04.2004 DE 102004021766**
**18.05.2004 DE 102004025032**

(43) Veröffentlichungstag der Anmeldung:
**24.01.2007 Patentblatt 2007/04**

(60) Teilanmeldung:
**10174032.2 / 2 255 627**
**10174033.0 / 2 255 628**
**10174036.3 / 2 255 629**
**10174037.1 / 2 255 630**

(73) Patentinhaber: **BASF SE**
**67056 Ludwigshafen (DE)**

(72) Erfinder:
- **TORMO I BLASCO, Jordi**
  **69514 Laudenbach (DE)**
- **GROTE, Thomas**
  **67157 Wachenheim (DE)**
- **SCHERER, Maria**
  **76829 Landau (DE)**
- **STIERL, Reinhard**
  **67251 Freinsheim (DE)**
- **STRATHMANN, Siegfried**
  **67117 Limburgerhof (DE)**
- **SCHÖFL, Ulrich**
  **68782 Brühl (DE)**
- **GEWEHR, Markus**
  **56288 Kastellaun (DE)**
- **MÜLLER, Bernd**
  **67227 Frankenthal (DE)**
- **SUAREZ-CERVIERI, Miguel, Octavio**
  **67434 Neustadt-Hambach (DE)**
- **NIEDENBRÜCK, Matthias**
  **67117 Limburgerhof (DE)**

(56) Entgegenhaltungen:
**EP-A- 1 031 571**

- **DATABASE WPI Section Ch, Week 200428 Derwent Publications Ltd., London, GB; Class C02, AN 2003-586936 XP002331636 & WO 03/053145 A 3. Juli 2003 (2003-07-03) in der Anmeldung erwähnt**

Bemerkungen:
Die Akte enthält technische Angaben, die nach dem Eingang der Anmeldung eingereicht wurden und die nicht in dieser Patentschrift enthalten sind.

EP 1 744 629 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft fungizide Mischungen, enthaltend als aktive Komponenten

1) eine Sulfamoylverbindung der Formel I,

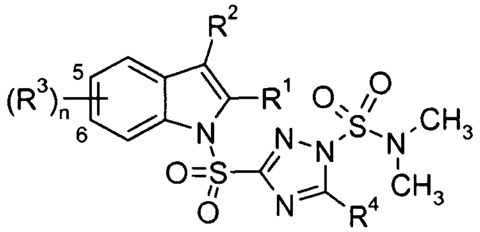

I

in der die Substituenten folgende Bedeutung haben:

- $R^1$ Wasserstoff, Halogen, Cyano, $C_1$-$C_4$-Alkyl, $C_1$-$C_2$-Halogenalkyl, $C_1$-$C_4$-Al-koxy, $C_1$-$C_4$-Alkylthio, $C_1$-$C_4$-Alkoxycarbonyl, Phenyl, Benzyl, Formyl oder CH=NOA;
- A Wasserstoff, $C_1$-$C_4$-Alkyl, $C_{1-}C_4$-Alkylcarbonyl;
- $R^2$ Wasserstoff, Halogen, Cyano, $C_1$-$C_4$-Alkyl, $C_1$-$C_2$-Halogenalkyl, $C_1$-$C_6$-Alkoxycarbonyl;
- $R^3$ Halogen, Cyano, Nitro, $C_1$-$C_4$-Alkyl, $C_1$-$C_2$-Halogenalkyl, $C_1$-$C_4$-Alkoxy, $C_1$-$C_4$-Alkylthio, $C_1$-$C_4$-Alkoxycarbonyl, Formyl oder CH=NOA;
- n 0, 1, 2, 3 oder 4;
- $R^4$ Wasserstoff, Halogen, Cyano, $C_1$-$C_4$-Alkyl oder $C_1$-$C_2$-Halogenalkyl;

und

2) mindestens einen Wirkstoff ausgewählt aus der folgenden Gruppe:

A) Strobilurine wie Azoxystrobin, Dimoxystrobin, Enestroburin, Fluoxastrobin, Kresoxim-methyl, Metominostrobin, Orysastrobin, Picoxystrobin, Pyraclostrobin oder Trifloxystrobin;

in einer synergistisch wirksamen Menge.

Außerdem betrifft die Erfindung ein Verfahren zur Bekämpfung von Schadpilzen mit Mischungen einer Verbindung I mit Wirkstoffen aus der Gruppe A) und die Verwendung der Verbindungen I mit Wirkstoffen aus der Gruppe A) zur Herstellung derartiger Mischungen sowie Mittel, die diese Mischungen enthalten.

Die als Komponente 1 voranstehend bezeichneten Sulfamoylverbindungen der Formel I, ihre Herstellung und deren Wirkung gegen Schadpilze sind aus der Literatur bekannt (EP-A 10 31 571, JP-A 2001-192 381).

Mischungen einer Sulfamoylverbindung der Formel I mit anderen Wirkstoffen sind in WO 03/053145 beschrieben.

Die hier und en Anspruch 4 genannten Wirkstoffe der Gruppen A) bis O), ihre Herstellung und ihre Wirkung gegen Schadpilze sind allgemein bekannt (vgl.:

http://www.hclrss.demon.co.uk/index.html):
Cyproconazol, 2-(4-Chlor-phenyl)-3-cyclopropyl-1-[1,2,4]triazol-1-yl-butan-2-ol (US 4 664 696);
Difenoconazole, 1-{2-[2-Chlor-4-(4-chlor-phenoxy)-phenyl]- 4-methyl-[1,3]dioxolan-2-ylmethyl}-1 H-[1,2,4]triazol (GB-A 2 098 607);
Enilconazol (Imazalil), 1-[2-(2,4-Dichlorphenyl)-2-(2-propenyloxy)ethyl]-1*H*-imidazol (Fruits, 1973, Bd. 28, S. 545);
Epoxiconazol, (2*RS*,3*SR*)-1-[3-(2-Chlorphenyl)-2,3-epoxy-2-(4-fluorphenyl)propyl]-1*H*-1,2,4-triazol (EP-A 196 038);
Fluquiconazol, 3-(2,4-Dichlor-phenyl)-6-fluor-2-[1,2,4]- triazol-1-yl-3H-quinazolin-4-on (Proc. Br. Crop Prot. Conf.-Pests Dis., 5-3, 411 (1992));
Flusilazol, 1-{[Bis-(4-fluor-phenyl)-methyl-silanyl]- methyl}-1 H-[1,2,4]triazol (Proc. Br. Crop Prot. Conf.-Pests Dis., 1, 413 (1984));
Hexaconazol, (*RS*)-2-(2,4-Dichlorphenyl)-1-(1*H*-1,2,4-triazol-1-yl)hexan-2-ol [CAS-RN 79983-71-4];
Metconazol, 5-(4-Chlor-benzyl)-2,2-dimethyl-1-[1,2,4]triazol-1-ylmethyl-cyclopentanol (GB 857 383);
Myclobutanil, 2-(4-Chlor-phenyl)-2-[1,2,4]triazol-1-ylmethyl-pentan-nitril [CAS RN 88671-89-0];
Penconazol, 1-[2-(2,4-Dichlor-phenyl)-pentyl]-1H- [1,2,4]triazol (Pesticide Manual, 12th Ed. (2000), S.712);

Prochloraz, Imidazol-1-carbonsäure-propyl-[2-(2,4,6-trichlor-phenoxy)-ethyl]-amid (US 3 991 071);
Prothioconazol, 2-[2-(1-Chlor-cyclopropyl)-3-(2-chlor-phenyl)-2-hydroxy-propyl]-2,4-dihydro-[1,2,4]triazol-3-thion (WO 96/16048);
Tebuconazol, 1-(4-Chlorphenyl)-4,4-dimethyl-3-[1,2,4]triazol-1-ylmethyl-pentan-3-ol (EP-A 40 345);
Triadimefon, 1-(4-Chlorphenoxy)-3,3-dimethyl-1-(1*H*-1,2,4-triazol-1-yl)-2-butanon (BE 793 867);
Triadimenol, β-(4-Chlorphenoxy)-α-(1,1-dimethylethyl)-1*H*-1,2,4-triazol-1-ethanol (DE 23 24 010);
Triflumizol, (4-Chlor-2-trifluormethyl-phenyl)-(2-propoxy- 1-[1,2,4]triazol-1-yl-ethyliden)-amin (JP-A 79/119 462);
Azoxystrobin, 2-{2-[6-(2-Cyano-1-vinyl-penta-1,3-dienyloxy)-pyrimidin-4-yloxy]-phenyl}-3-methoxy-acrylsäuremethylester (EP 382 375),
Dimoxystrobin, (*E*)-2-(methoxyimino)-*N*-methyl-2-[α-(2,5-xylyloxy)-*o*-tolyl]acetamid (EP 477 631);
Enestroburin, 2-{2-[3-(4-Chlorphenyl)-1-methyl-allylidenaminooxymethyl]-phenyl}-3-methoxy-acrylsäuremethylester (EP 936 213);
Fluoxastrobin, (*E*)-{2-[6-(2-chlorphenoxy)-5-fluorpyrimidin-4-yloxy]phenyl}(5,6-dihydro-1,4,2-dioxazin-3-yl)methanon-O-methyloxim (WO 97/27189);
Kresoxim-methyl, (*E*)-Methoxyimino[α-(*o*-tolyloxy)-*o*-tolyl]essigsäuremethylester (EP 253 213);
Metominostrobin, (*E*)-2-(Methoxyimino)-*N*-methyl-2-(2-phenoxyphenyl)acetamid (EP 398 692);
Orysastrobin, (2*E*)-2-(Methoxyimino)-2-{2-[(3*E*,5*E*,6*E*)-5-(methoxyimino)-4,6-dimethyl-2,8-dioxa-3,7-diazanona-3,6-dien-1-yl]phenyl}-*N*-methylacetamid (WO 97/15552);
Picoxystrobin, 3-Methoxy-2-[2-(6-trifluormethyl-pyridin-2-yloxymethyl)-phenyl]-acrylsäuremethylester (EP 278 595);
Pyraclostrobin, *N*-{2-[1-(4-Chlorphenyl)-1*H*-pyrazol-3-yloxymethyl]phenyl}(*N*-methoxy)carbaminsäuremethylester (WO 96/01256);
Trifloxystrobin, (*E*)-Methoxyimino-{(*E*)-α-[1-(α,α,α-trifluor-*m*-tolyl)ethylidenaminooxy]-*o*-tolyl}essigsäuremethylester (EP 460 575);
Benalaxyl, Methyl *N*-(phenylacetyl)-*N*-(2,6-xylyl)-DL-alaninat (DE 29 03 612), Metalaxyl-M (Mefenoxam), Methyl *N*-(methoxyacetyl)-*N*-(2,6-xylyl)-DL-alaninat (GB 15 00 581);
Ofurace, (*RS*)-α-(2-Chlor-*N*-2,6-xylylacetamido)-γ-butyrolacton [CAS RN 58810-48-3]; Oxadixyl; *N*-(2,6-Dimethylphenyl)-2-methoxy-*N*-(2-oxo-3-oxazolidinyl)acetamid (GB 20 58 059);
Spiroxamin, (8-tert-Butyl-1,4-dioxa-spiro[4.5]dec-2-yl)-diethyl-amin (EP-A 281 842);
Pyrimethanil, 4,6-Dimethyl-pyrimidin-2-yl)-phenyl-amin (DD-A 151 404);
Mepanipyrim, (4-Methyl-6-prop-1-inyl-pyrimidin-2-yl)-phenyl-amin (EP-A 224 339);
Cyprodinil, (4-Cyclopropyl-6-methyl-pyrimidin-2-yl)-phenyl-amin (EP-A 310 550);
Iprodion, 3-(3,5-Dichlor-phenyl)-2,4-dioxo-imidazolidin-1-carbonsäureisopropylamid (GB 13 12 536);
Procymidon, *N*-(3,5-Dichlorphenyl)-1,2-dimethylcyclopropan-1,2-dicarboximid (US 3 903 090);
Vinclozolin, 3-(3,5-Dichlor-phenyl)-5-methyl-5-vinyl-oxazolidin-2,4-dion (DE-OS 22 07 576);
Dimethomorph, 3-(4-Chlorphenyl)-3-(3,4-dimethoxyphenyl)-1-morpholin-4-yl-propenon (EP 120 321);
Flumetover, 2-(3,4-Dimethoxyphenyl)-*N*-ethyl-α,α,α-trifluor-*N*-methyl-*p*-toluamid [AGROW Nr. 243, 22 (1995)];
Flumorph, 3-(4-Fluorphenyl)-3-(3,4-dimethoxyphenyl)-1-morpholin-4-yl-propenon (EP 860 438);
Ferbam, Eisen(3+)dimethyldithiocarbamat (US 1 972 961);
Nabam, Dinatrium Ethylenbis(dithiocarbamat) (US 2 317 765);
Maneb, Mangan-ethylenbis(dithiocarbamat) (US 2 504 404);
Metam, Methyldithiocarbaminsäure (US 2 791 605);
Metiram, Zinkammoniat-ethylenbis(dithiocarbamat) (US 3 248 400);
Propineb, Zink Propylenbis(dithiocarbamat) Polymer (BE 611 960);
Polycarbamat, Bis(dimethylcarbamodithioato-κ*S*,κ*S'*)[μ-[[1,2-ethandiylbis[carbamo-dithioato-K*S*,K*S'*]](2-)]]di[Zink] [CAS RN 64440-88-6];
Thiram, Bis(dimethylthiocarbamoyl)disulfid (DE 642 532);
Ziram, Dimethyldithiocarbamat [CAS RN 137-30-4];
Zineb, Zink-ethylenbis(dithiocarbamat) (US 2 457 674);
Benomyl, 2-Acetylamino-benzoimidazol-1-carbonsäurebutylamid (US 3 631 176); Boscalid, 2-Chlor-*N*-(4'-chlorbiphenyl-2-yl)nicotinamid (EP-A 545 099);
Carbendazim, (1H-Benzoimidazol-2-yl)-carbaminsäuremethylester (US 3 657 443); Dithianon, 5,10-Dioxo-5,10-dihydro-naphtho[2,3-b][1,4]dithiin-2,3-dicarbonitril (GB 857 383);
Famoxadon, (*RS*)-3-Anilino-5-methyl-5-(4-phenoxyphenyl)-1,3-oxazolidin-2,4-dion [CAS RN 131807-57-3];
Fenamidon, (*S*)-1-Anilino-4-methyl-2-methylthio-4-phenylimidazolin-5-on [CAS RN 161326-34-7];
Penthiopyrad, (*RS*)-*N*-[2-(1,3-Dimethylbutyl)-3-thienyl]-1-methyl-3-(trifluormethyl)-1*H*-pyrazol-4-carboxamid (JP 10130268);
Fluopicolide (Picobenzamid), 2,6-Dichlor-N-(3-chlor-5-trifluormethyl-pyridin-2-ylmethyl)-benzamid (WO 99/42447);
Proquinazid, 6-Jodo-2-propoxy-3-propylquinazolin-4(3*H*)-on (WO 97/48684);

Quinoxyfen, 5,7-Dichlor-4-(4-fluor-phenoxy)-chinolin (US 5 240 940);
Thiophanat-methyl, 1,2-Phenylenbis(iminocarbonothioyl)bis(dimethylcarbamat) (DE-OS 19 30 540);
Triforine, *N,N'*-{Piperazine-1,4-diylbis[(trichlormethyl)methylen]}diformamid (DE 19 01 421);
5-Chlor-7-(4-methyl-piperidin-1-yl)-6-(2,4,6-trifluor-phenyl)-[1,2,4]triazolo[1,5-a]pyrimidin (WO 98/46607);
Bordeaux Brühe, Mischung von $CuSO_4$ x $3Cu(OH)_2$ x $3CaSO_4$ [CAS RN 8011-63-0] Kupferacetat, $Cu(OCOCH_3)_2$ [CAS RN 8011-63-0];
Kupferoxychlorid, $Cu_2Cl(OH)_3$ [CAS RN 1332-40-7];
basisches Kupfersulfat, $CuSO_4$ [CAS RN 1344-73-6];
Dinocap, die Mischung aus 2,6-Dinitro-4-octylphenylcrotonat und 2,4-Dinitro-6-octyl-phenylcrotonat, wobei "Octyl" eine Mischung aus 1-Methylheptyl, 1-Ethylhexyl und 1-Propylpentyl bedeutet (US 2 526 660);
Fenpiclonil, 4-(2,3-Dichlor-phenyl)-1 H-pyrrol-3-carbonitril (Proc. 1988 Br. Crop Prot. Conf. - Pests Dis., Bd. 1, S. 65);
Fludioxonil, 4-(2,2-Difluor-benzo[1,3]dioxol-4-yl)-1H-pyrrol-3-carbonitril (The Pecticide Manual, Hrsg. The British Crop Protection Council, 10. Aufl. (1995), S. 482);
Captafol, *N*-(1,1,2,2-Tetrachloroethylthio)cyclohex-4-en-1,2-dicarboximid (Phytopathology, Bd. 52, S.754 (1962));
Dichlofluanid, N-Dichlorfluormethylthio-*N'*,*N'*-dimethyl-*N*-phenylsulfamid (DE 11 93 498);
Tolylfluanid, *N*-Dichlorfluormethylthio-*N',N'*-dimethyl-*N*-*p*-tolylsulfamid (DE 11 93 498); Flubenthiavalicarb (Benthiavalicarb), {(S)-1-[(1 R)-1-(6-Fluor-benzothiazol-2-yl)-ethylcarbamoyl]-2-methyl-propyl}-carbaminsäureisopropylester (JP-A 09/323 984);
Chlorothalonil, 2,4,5,6-Tetrachlor-isophthalonitril (US 3 290 353);
Cyflufenamid, (*Z*)-*N*-[$\alpha$-(Cyclopropylmethoxyimino)-2,3-difluor-6-(trifluormethyl)benzy)]-2-phenylacetamid (WO 96/19442);
Diclofluanid, 1,1-Dichlor-*N*-[(dimethylamino)sulfonyl]-1-fluor-*N*-phenylmethansulfenamid [CAS-RN 1085-98-9];
Diethofencarb, Isopropyl 3,4-diethoxycarbanilat (EP 78 663);
Ethaboxam, *N*-(Cyano-2-thienylmethyl)-4-ethyl-2-(ethylamino)-5-thiazolcarboxamid (EP-A 639 574);
Fenhexamid, N-(2,3-dichlor-4-hydroxyphenyl)-1-methylcyclohexancarboxamid (Proc. Br. Crop Prot. Conf. - Pests Dis., 1998, Bd. 2, S. 327);
Fluazinam, 3-Chlor-N-[3-chlor-2,6-dinitro-4-(trifluoromethyl)phenyl]-5-(trifluormethyl)-2-pyridin-amin (The Pecticide Manual, Hrsg. The British Crop Protection Council, 10. Aufl. (1995), S. 474);
Iprovalicarb, [(1S)-2-Methyl-1-(1-p-tolyl-ethylcarbamoyl)-propyl]-carbaminsäure-isopropylester (EP-A 472 996);
Mandipropamid, (*RS*)-2-(4-Chlorphenyl)-*N*-[3-methoxy-4-(prop-2-inyloxy)phenethyl]-2-(prop-2-inyloxy)acetamid (vgl. WO 01/87822);
Metrafenon, 3'-Brom-2,3,4,6'-tetramethoxy-2',6-dimethylbenzophenon (US 5 945 567); Zoxamid, (*RS*)-3,5-Dichlor-*N*-(3-chlor-1-ethyl-1-methyl-2-oxopropyl)-*p*-toluamid [CAS RN 156052-68-5];
Oximetherderivate der Formel III (WO 99/14188);
Verbindungen der Formel IV (WO 97/48648; WO 02/094797; WO 03/14103).

Im Hinblick auf eine Senkung der Aufwandmengen und eine Verbreiterung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen.

Demgemäss wurden die eingangs definierten Mischungen gefunden. Es wurde außerdem gefunden, dass sich bei gleichzeitiger gemeinsamer oder getrennter Anwendung einer Verbindung I und eines Wirkstoffs aus der Gruppe A) oder bei Anwendung einer Verbindung I und eines Wirkstoffs aus der Gruppe A) nacheinander Schadpilze besser bekämpfen lassen als mit den Einzelverbindungen (synergistische Mischungen).

Die Mischungen einer Verbindung I und eines Wirkstoffs aus der Gruppe A), bzw. die gleichzeitige gemeinsame oder getrennte Verwendung einer Verbindung I und eines Wirkstoffs aus der Gruppe A) zeichnen sich aus durch eine hervorragende Wirksamkeit gegen ein breites Spektrum von pflanzenpathogenen Pilzen, insbesondere aus der Klasse der *Ascomyceten, Deuteromyceten, Oomyceten* und *Basidiomyceten.* Sie sind zum Teil systemisch wirksam und können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z.B. Gurken, Bohnen und Kürbisgewächse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen.

Vorteilhaft eignen sie sich zur Bekämpfung der folgenden pflanzenpathogenen Pilze: *Blumeria graminis* (echter Mehltau) an Getreide, *Erysiphe cichoracearum* und *Sphaerotheca fuliginea* an Kürbisgewächsen, *Podosphaera leucotricha* an Äpfeln, *Uncinula necator* an Reben, *Puccinia-Arten* an Getreide, *Rhizoctonia*-Arten an Baumwolle, Reis und Rasen, *Ustilago*-Arten an Getreide und Zuckerrohr, *Venturia inaequalis* an Äpfeln, *Bipolaris*- und *Drechslera*-Arten an Getreide, Reis und Rasen, Septoria-Arten an Weizen, *Botrytis cinerea* an Erdbeeren, Gemüse, Zierpflanzen und Reben, *Mycosphaerella*-Arten an Bananen, Erdnüssen und Getreide, *Pseudocercosporella herpotrichoides* an Weizen und

Gerste, *Pyricularia oryzae* an Reis, Phakopsora-Arten an Soja, *Phytophthora infestans* an Kartoffeln und Tomaten, *Pseudoperonospora-Arten* an Kürbisgewächsen und Hopfen, *Plasmopara viticola* an Reben, *Alternaria-Arten* an Gemüse und Obst sowie *Fusarium-* und *Verticillium-Arten.*

Insbesondere sind sie zur Bekämpfung von Schadpilzen aus der Klasse der *Oomyceten* geeignet.

Die Verbindungen I und Wirkstoffe aus der Gruppe A) können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

In den für Formeln I bis IV angegebenen Definitionen der Symbole wurden Sammelbegriffe verwendet, die für die folgenden Substituenten stehen:

Halogen: Fluor, Chlor, Brom und Jod;

Alkyl: gesättigte, geradkettige oder verzweigte Kohlenwasserstoffreste mit 1 bis 4 Kohlenstoffatomen, z.B. $C_1$-$C_4$-Alkyl wie Methyl, Ethyl, Propyl, 1-Methylethyl, Butyl, 1-Methyl-propyl, 2-Methylpropyl, 1,1-Dimethylethyl;

Halogenalkyl: geradkettige oder verzweigte Alkylgruppen mit 1 oder 2 Kohlenstoffatomen (wie vorstehend genannt), wobei in diesen Gruppen teilweise oder vollständig die Wasserstoffatome durch Halogenatome wie vorstehend genannt ersetzt sein können: insbesondere $C_1$-$C_2$-Halogenalkyl wie Chlormethyl, Brommethyl, Dichlormethyl, Trichlormethyl, Fluormethyl, Difluormethyl, Trifluormethyl, Chlorfluormethyl, Dichlorfluormethyl, Chlordifluormethyl, 1-Chlorethyl, 1-Bromethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl oder 1,1,1-Trifluorprop-2-yl.

Die Formel I repräsentiert insbesondere Verbindungen, in denen der Index n 0, 1 oder 2, bevorzugt 0 oder 1 bedeutet.

Daneben sind auch Verbindungen I bevorzugt, in denen $R^1$ Wasserstoff, Methyl, Ethyl, n-, oder iso-Propyl, Fluor, Chlor, Brom, Iod, Methylthio, Ethylthio, Trifluormethyl, Pentafluorethyl, Cyano, Phenyl oder Formyl, besonders Wasserstoff, Brom oder Methyl, insbesondere Methyl bedeutet.

Gleichermaßen bevorzugt sind Verbindungen I, in denen $R^2$ Wasserstoff, Fluor, Chlor, Brom, Iod, Methyl, Trifluormethyl, Methoxycarbonyl, Ethoxycarbonyl, n-Propoxycarbonyl, Isopropoxycarbonyl oder n-Butoxycarbonyl, besonders Chlor, Brom, Methoxycarbonyl, n-Propoxycarbonyl oder n-Butoxycarbonyl, insbesondere Brom bedeutet.

Die Gruppe $R^3$ steht bevorzugt in 5- und/oder 6-Position. Diese Verbindungen sind zur Verwendung in den erfindungsgemäßen Mischungen besonders geeignet.

Weiterhin bevorzugt sind Verbindungen I, in denen $R^3$ Fluor, Chlor, Brom, Iod, Cyano, Nitro, Methyl, Ethyl, Methoxy, Trifluormethyl, besonders Fluor, Chlor, Brom, Cyano, Methyl, Trifluormethyl oder Methoxy, insbesondere Fluor bedeutet.

Insbesondere bevorzugt ist die Verbindung 3-(3-Brom-6-fluor-2-methyl-indol-1-sulfonyl)-[1,2,4]triazol-1-sulfonsäuredimethylamid (Verbindung IA).

Eine weitere bevorzugte Ausführung der erfindungsgemäßen Mischungen betrifft die Kombination einer der vorgenannten Verbindungen der Formel I und Strobilurine wie Azoxystrobin, Fluoxastrobin, Picoxystrobin, Pyraclostrobin oder Trifloxystrobin.

Bevorzugt setzt man bei der Bereitstellung der Mischungen die reinen Wirkstoffe ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel als weitere Aktivkomponenten beimischen kann.

Üblicherweise kommen Mischungen der Verbindung I mit einem Wirkstoff aus der Gruppe A) zur Anwendung. Unter Umständen können jedoch Mischungen der Verbindung I mit zwei oder ggf. mehreren Aktivkomponenten vorteilhaft sein.

Als weitere Aktivkomponenten im voranstehenden Sinne kommen besonders die eingangs genannten Wirkstoffe aus den Gruppen A) bis O):

A) Strobilurine wie Azoxystrobin, Dimoxystrobin, Enestroburin, Fluoxastrobin, Kresoxim-methyl, Metominostrobin, Orysastrobin, Picoxystrobin, Pyraclostrobin oder Trifloxystrobin;

B) Azole wie Cyproconazol, Difenoconazole, Enilconazol, Epoxiconazol, Fluquiconazol, Flusilazol, Hexaconazol, Imazalil, Metconazol, Myclobutanil, Penconazol, Prochloraz, Prothioconazol, Tebuconazol, Triadimefon, Triadimenol, Triflumizol;

C) Acylalanine wie Benalaxyl, Metalaxyl, Mefenoxam, Ofurace, Oxadixyl;

D) Aminderivate wie Spiroxamin;

E) Anilinopyrimidine wie Pyrimethanil, Mepanipyrim oder Cyprodinil;

F) Dicarboximide wie Iprodion, Procymidon, Vinclozolin;

G) Zimtsäureamide und Analoge wie Dimethomorph, Flumetover oder Flumorph;

H) Dithiocarbamate wie Ferbam, Nabam, Maneb, Metam, Metiram, Propineb, Polycarbamat, Thiram, Ziram, Zineb;

I) Heterocylische Verbindungen wie Benomyl, Boscalid, Carbendazim, Dithianon, Famoxadon, Fenamidon, Penthiopyrad, Picobenzamid, Proquinazid, Quinoxyfen, Thiophanat-methyl, Triforine oder 5-Chlor-7-(4-methyl-piperidin-1-yl)-6-(2,4,6-trifluor-phenyl)-[1,2,4]triazolo[1,5-a]pyrimidin der Formel II,

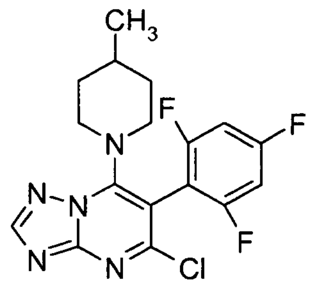

II

K) Schwefel und Kupferfungizide wie Bordeaux Brühe, Kupferacetat, Kupferoxychlorid, basisches Kupfersulfat;

L) Nitrophenylderivate, wie Dinocap;

M) Phenylpyrrole wie Fenpiclonil oder Fludioxonil;

N) Sulfensäurederivate wie Captafol, Dichlofluanid, Tolylfluanid;

O) Sonstige Fungizide wie Benthiavalicarb, Chlorothalonil, Cyflufenamid, Diclofluanid, Diethofencarb, Ethaboxam, Fenhexamid, Fluazinam, Iprovalicarb, Metrafenon, Zoxamid; Oximetherderivate der Formel III,

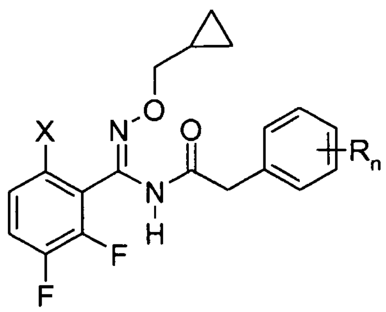

III

in der

X $C_1$-$C_4$-Halogenalkoxy,
n 0, 1, 2 oder 3,
R Halogen, $C_1$-$C_4$-Alkyl, $C_1$-$C_4$-Halogenalkyl, $C_1$-$C_4$-Alkoxy, oder Halogenalkoxy bedeuten; und

Verbindungen der Formel IV,

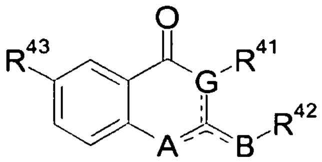

IV

in der die Variablen folgende Bedeutung haben:

A O oder N;
B N oder eine direkte Bindung;
G C oder N;
$R^{41}$ $C_1$-$C_4$-Alkyl;
$R^{42}$ $C_1$-$C_4$-Alkoxy; und
$R^{43}$ Halogen;

und insbesondere die Wirkstoffe in Frage: Strobilurine wie Azoxystrobin, Fluoxastrobin, Picoxystrobin, Pyraclostrobin oder Trifloxystrobin;
Acylalanine wie Benalaxyl, Metalaxyl, Mefenoxam, Ofurace oder Oxadixyl;
Zimtsäureamide und Analoge wie Dimethomorph, Flumetover oder Flumorph; heterocylische Verbindungen wie Dithianon, Picobenzamid, Thiophanat-methyl oder Triforine;
Schwefel oder Kupferfungizide wie Bordeaux Brühe, Kupferacetat, Kupferoxychlorid, basisches Kupfersulfat;
ein Wirkstoff aus Captafol, Dichlofluanid, Tolylfluanid, Benthiavalicarb, Chlorothalonil, Cyflufenamid, Diclofluanid, Diethofencarb, Ethaboxam, Fenhexamid, Fluazinam, Iprovalicarb, Metrafenon und Zoxamid.

Die Verbindung I und der Wirkstoff aus der Gruppe A) werden üblicherweise in einem Gewichtsverhältnis von 100:1 bis 1:100, vorzugsweise 20:1 bis 1:20, insbesondere 10:1 bis 1:10 angewandt.

Die weiteren Aktivkomponenten werden gewünschtenfalls im Verhältnis von 20:1 bis 1:20 zu der Verbindung I zugemischt.

Die Aufwandmengen der erfindungsgemäßen Mischungen liegen je nach Art der Verbindung und des gewünschten Effekts bei 5 g/ha bis 2000 g/ha, vorzugsweise 50 bis 900 g/ha, insbesondere 50 bis 750 g/ha.

Die Aufwandmengen für die Verbindung I liegen entsprechend in der Regel bei 1 bis 1000 g/ha, vorzugsweise 10 bis 900 g/ha, insbesondere 20 bis 750 g/ha.

Die Aufwandmengen für den Wirkstoff aus den Gruppen A) bis O) liegen entsprechend in der Regel bei 1 bis 2000 g/ha, vorzugsweise 10 bis 900 g/ha, insbesondere 40 bis 500 g/ha.

Bei der Saatgutbehandlung werden im allgemeinen Aufwandmengen an Mischung von 1 bis 1000 g/100 kg Saatgut, vorzugsweise 1 bis 750 g/100 kg, insbesondere 5 bis 500 g/100 kg verwendet.

Das Verfahren zur Bekämpfung von Schadpilzen erfolgt durch die getrennte oder gemeinsame Applikation der Verbindung I und des Wirkstoffs aus der Gruppe A) oder der Mischungen aus der Verbindung I und des Wirkstoffs aus der Gruppe A) durch Besprühen oder Bestäuben der Samen, der Pflanzen oder der Böden vor oder nach der Aussaat der Pflanzen oder vor oder nach dem Auflaufen der Pflanzen.

Die erfindungsgemäßen Mischungen, bzw. die Verbindung I und der Wirkstoff aus der Gruppe A) können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)
10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)
20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)
15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)
40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)
20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG) 50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP) 75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)
5 Gew.Teile der Wirkstoffe werden fein gemahlen und mit 95 % feinteiligem Kaolin innig vermischt. Man erhält dadurch ein Stäubmittel.
I) Granulate (GR, FG, GG, MG)
0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.
J) ULV- Lösungen (UL)
10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.
Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.
Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.
Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.
Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:10 bis 10: 1 zugemischt.
Die Verbindungen I und A) bis O), bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und A) bis O) bei getrennter Ausbringung, behandelt. Die Anwendung kann vor oder nach dem Befall durch die Schadpilze erfolgen.
Die fungizide Wirkung der Verbindung und der Mischungen lässt sich durch folgende Versuche zeigen:
Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.
Die visuell ermittelten Werte für den Prozentanteil befallener Blattflächen wurden in Wirkungsgrade als % der unbehandelten Kontrolle umgerechnet:
Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und
$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.
Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt

und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

## Patentansprüche

**1.** Fungizide Mischungen, enthaltend als aktive Komponenten

1) eine Sulfamoylverbindung der Formel I,

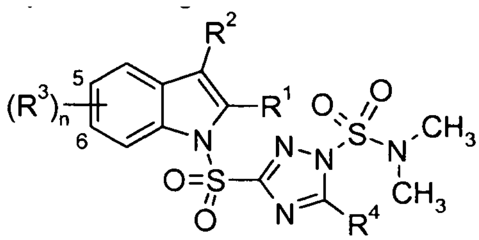

I

in der die Substituenten folgende Bedeutung haben:

$R^1$ Wasserstoff, Halogen, Cyano, $C_1$-$C_4$-Alkyl, $C_1$-$C_2$-Halogenalkyl, $C_1$-$C_4$-Alkoxy, $C_1$-$C_4$-Alkylthio, $C_1$-$C_4$-Alkoxycarbonyl, Phenyl, Benzyl, Formyl oder CH=NOA;
A Wasserstoff, $C_1$-$C_4$-Alkyl, $C_1$-$C_4$-Alkylcarbonyl;
$R^2$ Wasserstoff, Halogen, Cyano, $C_1$-$C_4$-Alkyl, $C_1$-$C_2$-Halogenalkyl, $C_1$-$C_6$-Alkoxycarbonyl;
$R^3$ Halogen, Cyano, Nitro, $C_1$-$C_4$-Alkyl, $C_1$-$C_2$-Halogenalkyl, $C_1$-$C_4$-Alkoxy, $C_1$-$C_4$-Alkylthio, $C_1$-$C_4$-Alkoxycarbonyl, Formyl oder CH=NOA;
n 0, 1, 2, 3 oder 4;
$R^4$ Wasserstoff, Halogen, Cyano, $C_1$-$C_4$-Alkyl oder $C_1$-$C_2$-Halogenalkyl;

und
2) mindestens einen Wirkstoff ausgewählt aus der Gruppe:

A) Strobilurine: Azoxystrobin, Dimoxystrobin, Enestroburin, Fluoxastrobin, Kresoxim-methyl, Metominostrobin, Orysastrobin, Picoxystrobin, Pyraclostrobin oder Trifloxystrobin;

in einer synergistisch wirksamen Menge.

**2.** Fungizide Mischungen gemäß Anspruch 1, enthaltend als Verbindung der Formel I 3-(3-Brom-6-fluor-2-methylindol-1-sulfonyl)-[1,2,4]triazol-1-sulfonsäuredimethylamid der Formel IA

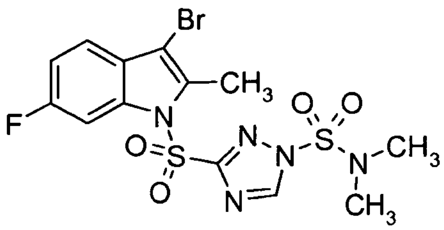

IA.

3. Fungizide Mischungen gemäß Anspruch 1 oder 2, enthaltend eine Verbindung der Formel I und Azoxystrobin, Fluoxastrobin, Picoxystrobin, Pyraclostrobin oder Trifloxystrobin.

4. Fungizide Mischungen gemäß einem der Ansprüche 1 bis 3, enthaltend einen weiteren Wirkstoff aus der Gruppe A) gemäß Anspruch 1 oder aus den Gruppen B) bis O):

B) Strobilurine wie Azoxystrobin, Dimoxystrobin, Enestroburin, Fluoxastrobin, Kresoxim-methyl, Metominostrobin, Orysastrobin, Picoxystrobin, Pyraclostrobin oder Trifloxystrobin;
C) Acylalanine wie Benalaxyl, Metalaxyl, Mefenoxam, Ofurace, Oxadixyl;
D) Aminderivate wie Spiroxamin;
E) Anilinopyrimidine wie Pyrimethanil, Mepanipyrim oder Cyprodinil;
F) Dicarboximide wie Iprodion, Procymidon, Vinclozolin;
G) Zimtsäureamide und Analoge wie Dimethomorph, Flumetover oder Flumorph;
H) Dithiocarbamate wie Ferbam, Nabam, Maneb, Metam, Metiram, Propineb, Polycarbamat, Thiram, Ziram, Zineb;
I) Heterocylische Verbindungen wie Benomyl, Boscalid, Carbendazim, Dithianon, Famoxadon, Fenamidon, Penthiopyrad, Picobenzamid, Proquinazid, Quinoxyfen, Thiophanat-methyl, Triforine oder
5-Chlor-7-(4-methyl-piperidin-1-yl)-6-(2,4,6-trifluor-phenyl)-[1,2,4]triazolo[1,5-a]pyrimidin der Formel II,

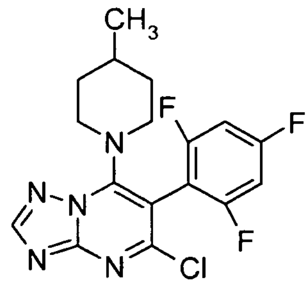

II

K) Schwefel und Kupferfungizide wie Bordeaux Brühe, Kupferacetat, Kupferoxychlorid, basisches Kupfersulfat;
L) Nitrophenylderivate, wie Dinocap;
M) Phenylpyrrole wie Fenpiclonil oder Fludioxonil;
N) Sulfensäurederivate wie Captafol, Dichlofluanid, Tolylfluanid;
O) Sonstige Fungizide wie Benthiavalicarb, Chlorothalonil, Cyflufenamid, Diclofluanid, Diethofencarb, Ethaboxam, Fenhexamid, Fluazinam, Iprovalicarb, Metrafenon, Zoxamid;
Oximetherderivate der Formel III,

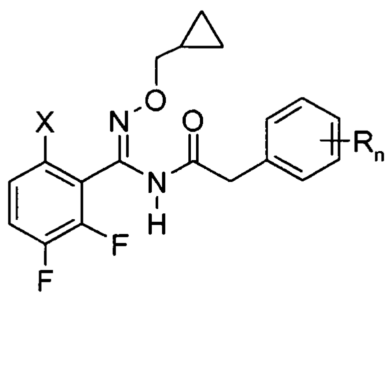

III

in der

X $C_1$-$C_4$-Halogenalkoxy,
n 0, 1, 2 oder 3,
R Halogen, $C_1$-$C_4$-Alkyl, $C_1$-$C_4$-Halogenalkyl, $C_1$-$C_4$-Alkoxy, oder Halogenalkoxy bedeuten; und

Verbindungen der Formel IV,

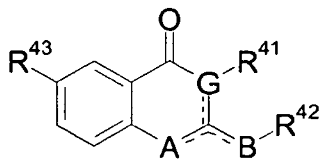

IV

in der die Variablen folgende Bedeutung haben:

A O oder N;
B N oder eine direkte Bindung;
G C oder N;
$R^{41}$ $C_1$-$C_4$-Alkyl;
$R^{42}$ $C_1$-$C_4$-Alkoxy; und
$R^{43}$ Halogen.

**5.** Fungizide Mischungen gemäß einem der Ansprüche 1 bis 4, enthaltend eine Verbindung der Formel I und einen Wirkstoff aus der Gruppe A) in einem Gewichtsverhältnis von 100:1 bis 1:100.

**6.** Mittel, enthaltend einen flüssigen oder festen Trägerstoff und eine Mischung gemäß einem der Ansprüche 1 bis 5.

**7.** Verfahren zur Bekämpfung von Schadpilzen, **dadurch gekennzeichnet, dass** man die Pilze, deren Lebensraum oder die vor Pilzbefall zu schützenden Pflanzen, den Boden oder Saatgüter mit einer synergistisch wirksamen Menge einer Verbindung I und eines Wirkstoffs aus der Gruppe A) gemäß Anspruch 1 behandelt.

**8.** Verfahren nach Anspruch 7, **dadurch gekennzeichnet, dass** man eine Verbindung I und die Wirkstoffe aus der Gruppe A) gemäß Anspruch 1 gleichzeitig, und zwar gemeinsam oder getrennt, oder nacheinander ausbringt.

**9.** Verfahren nach Anspruch 7, **dadurch gekennzeichnet, dass** man die Mischungen gemäß einem der Ansprüche 1 bis 7 auf die vor Pilzbefall zu schützenden Pflanzen oder den Boden in einer Menge von 5 g/ha bis 2000 g/ha aufwendet.

**10.** Verfahren nach Ansprüchen 7 und 8, **dadurch gekennzeichnet, dass** man die Mischungen gemäß einem der Ansprüche 1 bis 4 in einer Menge von 1 bis 1000 g/100 kg Saatgut anwendet.

**11.** Verfahren nach Ansprüchen 7 bis 10, **dadurch gekennzeichnet, dass** Schadpilze aus der Klasse der *Oomyceten* bekämpft werden.

**12.** Saatgut, enthaltend die Mischungen gemäß einem der Ansprüche 1 bis 5 in einer Menge von 1 bis 1000 g/100 kg.

**13.** Verwendung einer Verbindung I und einem Wirkstoff aus der Gruppe A) gemäß Anspruch 1 zur Herstellung eines zur Bekämpfung von Schadpilzen geeigneten Mittels.

## Claims

**1.** A fungicidal mixture comprising, as active components,

1) a sulfamoyl compound of the formula I,

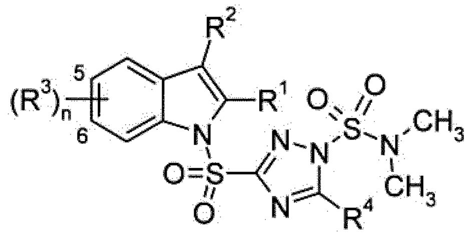

I

in which the substituents are as defined below:

$R^1$ is hydrogen, halogen, cyano, $C_1$-$C_4$-alkyl, $C_1$-$C_2$-haloalkyl, $C_1$-$C_4$-alkoxy, $C_1$-$C_4$-alkylthio, $C_1$-$C_4$-alkoxycarbonyl, phenyl, benzyl, formyl or CH=NOA;
A is hydrogen, $C_1$-$C_4$-alkyl, $C_1$-$C_4$-alkylcarbonyl;
$R^2$ is hydrogen, halogen, cyano, $C_1$-$C_4$-alkyl, $C_1$-$C_2$-haloalkyl, $C_1$-$C_6$-alkoxycarbonyl;
$R^3$ is halogen, cyano, nitro, $C_1$-$C_4$-alkyl, $C_1$-$C_2$-haloalkyl, $C_1$-$C_4$-alkoxy, $C_1$-$C_4$-alkylthio, $C_1$-$C_4$-alkoxycarbonyl, Formyl or CH=NOA;
n is 0, 1, 2, 3 or 4;
$R^4$ is hydrogen, halogen, cyano, $C_1$-$C_4$-alkyl or $C_1$-$C_2$-haloalkyl;

and
2) at least one active compound selected from the group:

A) strobilurins: azoxystrobin, dimoxystrobin, enestroburin, fluoxastrobin, kresoxim-methyl, metominostrobin, orysastrobin, picoxystrobin, pyraclostrobin or trifloxystrobin;

in a synergistically effective amount.

**2.** The fungicidal mixture according to claim 1, comprising, as compound of the formula I, N,N-dimethyl-3-(3-bromo-6-fluoro-2-methylindole-1-sulfonyl)-[1,2,4]triazole-1-sulfonamide of the formula IA

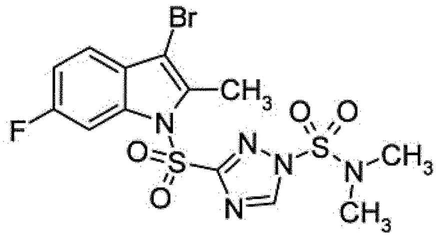

IA.

**3.** The fungicidal mixture according to claim 1 or 2, comprising a compound of the formula I and azoxystrobin, fluoxastrobin, picoxystrobin, pyraclostrobin or trifloxystrobin.

**4.** The fungicidal mixture according to any of claims 1 to 3, comprising a further active compound from groupe A) according to claim 1 or from groups B) to O):

B) strobilurins, such as azoxystrobin, dimoxystrobin, enestroburin, fluoxastrobin, kresoxim-methyl, metominostrobin, orysastrobin, picoxystrobin, pyraclostrobin or trifloxystrobin;
C) acylalanines, such as benalaxyl, metalaxyl, mefenoxam, ofurace, oxadixyl;
D) amine derivatives, such as spiroxamine;
E) anilinopyrimidines, such as pyrimethanil, mepanipyrim or cyprodinil;
F) dicarboximides, such as iprodione, procymidone, vinclozolin;
G) cinnamides and analogs, such as dimethomorph, flumetover or flumorph;
H) dithiocarbamates, such as ferbam, nabam, maneb, metam, metiram, propineb, polycarbamate, thiram, ziram, zineb;
I) heterocylic compounds, such as benomyl, boscalid, carbendazim, dithianon, famoxadone, fenamidone, penthiopyrad, picobenzamid, proquinazid, quinoxyfen, thiophanate-methyl, triforine or 5-chloro-7-(4-methylpiperidin-1-yl)-6-(2,4 6-trifluorophenyl)-[1,2,4]triazolo[1,5-a]pyrimidine of the formula II,

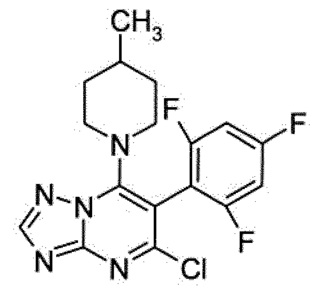

II

K) sulfur and copper fungicides, such as Bordeaux mixture, copper acetate, copper - oxychloride, basic copper sulfate;
L) nitrophenyl derivatives, such as dinocap;
M) phenylpyrroles, such as fenpiclonil or fludioxonil;
N) sulfenic acid derivatives, such as captafol, dichlofluanid, tolylfluanid;
O) other fungicides, such as benthiavalicarb, chlorothalonil, cyflufenamid, diclofluanid, diethofencarb, ethaboxam, fenhexamid, fluazinam, iprovalicarb, metrafenone, zoxamide;
oxime ether derivatives of the formula III,

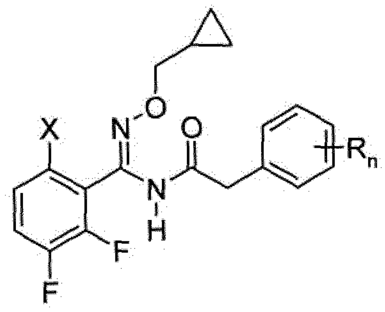

III

in which

X is $C_1$-$C_4$-haloalkoxy,
n is 0, 1, 2 or 3,
R is halogen, $C_1$-$C_4$-alkyl, $C_1$-$C_4$-haloalkyl, $C_1$-$C_4$-alkoxy or haloalkoxy; and

compounds of the formula IV,

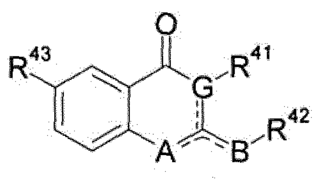

IV

in which the variables are as defined below:
A is O or N;
B is N or a direct bond;
G is C or N;
$R^{41}$ is $C_1$-$C_4$-alkyl;
$R^{42}$ is $C_1$-$C_4$-alkoxy; and
$R^{43}$ is halogen.

**5.** The fungicidal mixture according to any of claims 1 to 4, comprising a compound of the formula I and an active compound from groupe A) in a weight ratio of from 100:1 to 1:100.

**6.** A composition, comprising a solid or liquid carrier and a mixture according to any of claims 1 to 5.

**7.** A method for controlling harmful fungi, wherein the fungi, their habitat or the plants, the soil or seed to be protected against fungal attack are/is treated with a synergistically effective amount of a compound I and an active compound from group A) according to claim 1.

**8.** The method according to claim 7, wherein a compound I and the active compound from group A) according to claim 1 are applied simultaneously, that is jointly or separately, or in succession.

**9.** The method according to claim 7, wherein the mixtures according to any of claims 1 to 7 are applied to the soil or the plants to be protected against fungal attack on an amount of from 5 g/ha to 2000 g/ha.

**10.** The method according to claim 7 or 8, wherein the mixtures according to any of claims 1 to 4 are applied in an amount of from 1 to 1000 g/100 kg of seed.

**11.** The method according to claims 7 to 10, wherein harmful fungi from the class of the *Oomycetes* are controlled.

**12.** Seed, comprising the mixtures according to any of claims 1 to 5 in an amount of from 1 to 1000 g/100 kg.

**13.** The use of a compound I and an active compound from groupe A) according to claim 1 for preparing a composition suitable for controlling harmful fungi.

**Revendications**

**1.** Mélanges fongicides, contenant comme composants actifs

1) un composé sulfamoyle de formule I,

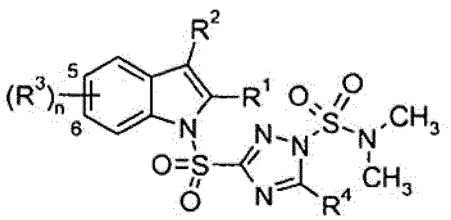

I

dans laquelle les substituants ont la signification suivante :

$R^1$ hydrogène, halogène, cyano, $C_1$-$C_4$-alkyle, $C_1$-$C_2$-halogénoalkyle, $C_1$-$C_4$-alcoxy, $C_1$-$C_4$-alkylthio, $C_1$-$C_4$-alcoxycarbonyle, phényle, benzyle, formyle ou CH=NOA ;
A hydrogène, $C_1$-$c_4$-alkyle, $C_1$-$C_4$-alkylcarbonyle ;
$R^2$ hydrogène, halogène, cyano, $C_1$-$C_4$-alkyle, $C_1$-$C_2$-halogénoalkyle, $C_1$-$C_6$-alcoxycarbonyle ;
$R^3$ halogène, cyano, nitro, $C_1$-$C_4$-alkyle, $C_1$-$C_2$-halogénoalkyle, $C_1$-$C_4$-alcoxy, $C_1$-$C_4$-alkylthio, $C_1$-$C_4$-alcoxycarbonyle, formyle ou CH=NOA ;
n vaut 0, 1, 2, 3 ou 4 ;
$R^4$ hydrogène, halogène, cyano, $C_1$-$C_4$-alkyle ou $C_1$-$C_2$-halogénoalkyle ; et

2) au moins une substance active choisie dans le groupe :

A) les strobilurines : azoxystrobine, dimoxystrobine, énestroburine, fluoxastrobine, krésoxim-méthyl, métominostrobine, orysastrobine, picoxystrobine, pyraclostrobine ou trifloxystrobine ;

en une quantité synergiquement active.

2. Mélanges fongicides selon la revendication 1, contenant comme composé de formule I du diméthylamide de l'acide 3-(3-bromo-6-fluoro-2-méthylindole-1-sulfonyl)-[1,2,4]triazol-1-sulfonique de formule IA

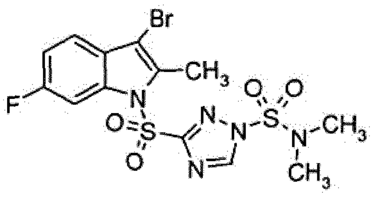

IA.

3. Mélanges fongicides selon la revendication 1 ou 2, contenant un composé de formule I et de l'azoxystrobine, de la fluoxastrobine, de la picoxystrobine, de la pyraclostrobine ou de la trifloxystrobine.

4. Mélanges fongicides selon l'une quelconque des revendications 1 à 3, contenant une autre substance active du groupe A) selon la revendication 1 ou des groupes B) à O) ;

B) les strobilurines telles que l'azoxystrobine, la dimoxystrobine, l'énestroburine, la fluoxastrobine, le krésoxim-méthyl, la métominostrobine, l'orysastrobine, la picoxystrobine, la pyraclostrobine ou la trifloxystrobine ;
C) les acylalanines telles que le benalaxyl, le métalaxyl, le méfénoxam, l'ofurace, l'oxadixyl ;
D) les dérivés d'amine, tels que la spiroxamine ;
E) les anilinopyrimidines telles que le pyriméthanil, le mépanipyrim ou le cyprodinil ;
F) les dicarboximides tels que l'iprodione, la procymidone, le vinclozoline ;
G) les amides de l'acide cinnamique et analogues, tels que le diméthomorph, le flumetover ou le flumorph ;
H) les dithiocarbamates tels que le ferbam, le nabam, le maneb, le métam, le métiram, le propineb, le polycarbamate, le thiram, le ziram, le zineb ;
I) les composés hétérocycliques tels que le bénomyl, le boscalide, la carbendazime, le dithianon, le famoxadone, la fénamidone, penthiopyrad, le proquinazid, le quinoxyfène, le thiophanate-méthyl, la triforine ou la 5-chloro-7-(4-méthylpipéridin-1-yl)-6-(2,4,6-trifluorophényl)-[1,2,4]triazolo[1,5-a]pyrimidine de formule II,

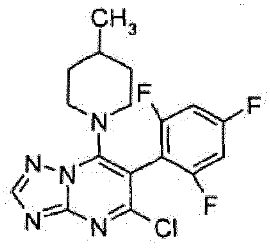

II

K) le soufre et les fongicides à base de cuivre, tels que la bouillie bordelaise, l'acétate de cuivre, l'oxychlorure de cuivre, le sulfate de cuivre basique ;
L) les dérivés du nitrophényle, tels que le dinocap ;
M) les phénylpyrroles, tels que le fenpiclonil ou le fludioxonil ;
N) les dérivés de l'acide sulfénique, tels que le captafol, le dichlofluanide, le toluyifluanide ;
O) d'autres fongicides tels que le benthiavalicarb, le chlorothalonil, le cyflufénamide, le diclofluanide, le diéthofencarb, l'éthaboxam, le fenhexamid, le fluazinam, l'iprovalicarb, la métrafenone, la zoxamide ; les dérivés d'oxime-éther de formule III,

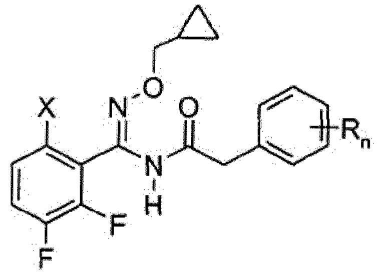

III

où

X signifie $C_1$-$C_4$-halogénoalcoxy,
n vaut 0, 1, 2 ou 3,
R signifie halogène, $C_1$-$C_4$-alkyle, $C_1$-$C_4$-halogénoalkyle, $C_1$-$C_4$-alcoxy ou halogénoalcoxy ; et

les composés de formule IV,

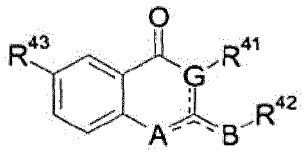

IV

dans laquelle les variables ont la signification suivante :

A O ou N ;
B N ou une liaison directe ; ;
G C ou N ;
$R^{41}$ $C_1$-$C_4$-alkyle ;
$R^{42}$ $C_1$-$C_4$-alcoxy ; et
$R^{43}$ halogène.

**5.** Mélanges fongicides selon l'une quelconque des revendications 1 à 4, contenant un composé de formule I et une substance active du groupe A) dans un rapport pondéral de 100:1 à 1:100.

**6.** Agent, contenant une substance support liquide ou solide et un mélange selon l'une quelconque des revendications 1 à 5.

**7.** Procédé pour lutter contre des champignons nuisibles, **caractérisé en ce qu'**on traite les champignons, leur espace de vie ou les plantes, le sol ou les semences à protéger contre une attaque par des champignons avec une quantité synergiquement active d'un composé I et d'une substance active du groupe A) selon la revendication 1.

**8.** Procédé selon la revendication 7, **caractérisé en ce qu'**on applique un composé de formule I et les substances actives du groupe A) selon la revendication 1 simultanément, c'est-à-dire ensemble ou séparément, ou consécutivement.

**9.** Procédé selon la revendication 7, **caractérisé en ce qu'**on applique les mélanges selon l'une quelconque des revendications 1 à 7 sur les plantes ou le sol à protéger contre une attaque par des champignons en une quantité de 5 g/ha à 2000 g/ha.

**10.** Procédé selon les revendications 7 et 8, **caractérisé en ce qu'**on utilise les mélanges selon l'une quelconque des revendications 1 à 4 en une quantité de 1 à 1000 g/100 kg de semences.

**11.** Procédé selon les revendications 7 à 10, **caractérisé en ce qu'**on lutte contre des champignons nuisibles de la classe des oomycètes.

**12.** Semences, contenant les mélanges selon l'une quelconque des revendications 1 à 5 en une quantité de 1 à 1000 g/100 kg.

**13.** Utilisation d'un composé I et d'une substance active du groupe A) selon la revendication 1 pour la préparation d'un agent approprié pour lutter contre des champignons nuisibles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1031571 A
- JP 2001192381 A
- WO 03053145 A
- US 4664696 A
- GB 2098607 A
- EP 196038 A
- GB 857383 A
- US 3991071 A
- WO 9616048 A
- EP 40345 A
- BE 793867
- DE 2324010
- JP 54119462 A
- EP 382375 A
- EP 477631 A
- EP 936213 A
- WO 9727189 A
- EP 253213 A
- EP 398692 A
- WO 9715552 A
- EP 278595 A
- WO 9601256 A
- EP 460575 A
- DE 2903612
- GB 1500581 A
- GB 2058059 A
- EP 281842 A
- DD 151404 A
- EP 224339 A
- EP 310550 A
- GB 1312536 A
- US 3903090 A
- DE OS2207576 A
- EP 120321 A
- EP 860438 A
- US 1972961 A
- US 2317765 A
- US 2504404 A
- US 2791605 A
- US 3248400 A
- BE 611960
- DE 642532
- US 2457674 A
- US 3631176 A
- EP 545099 A
- US 3657443 A
- JP 10130268 B
- WO 9942447 A
- WO 9748684 A
- US 5240940 A
- DE 1930540 A
- DE 1901421
- WO 9846607 A
- US 2526660 A
- DE 1193498
- JP 9323984 A
- US 3290353 A
- WO 9619442 A
- EP 78663 A
- EP 639574 A
- EP 472996 A
- WO 0187822 A
- US 5945567 A
- WO 9914188 A
- WO 9748648 A
- WO 02094797 A
- WO 0314103 A


### In der Beschreibung aufgeführte Nicht-Patentliteratur


- *Fruits,* 1973, vol. 28, 545
- *Proc. Br. Crop Prot. Conf.-Pests Dis.,* 1992, vol. 5-3, 411
- *Proc. Br. Crop Prot. Conf.-Pests Dis,* 1984, vol. 1, 413
- Pesticide Manual. 2000, 712
- *AGROW Nr. 243,* 1995, 22
- *Proc. 1988 Br. Crop Prot. Conf. - Pests Dis.,* 1988, vol. 1, 65
- The Pecticide Manual. The British Crop Protection Council, 1995, 482
- *Phytopathology,* 1962, vol. 52, 754
- *Proc. Br. Crop Prot. Conf. - Pests Dis.,* 1998, vol. 2, 327
- The Pecticide Manual. The British Crop Protection Council, 1995, 474
- **COLBY, S. R.** Calculating synergistic and antagonistic responses of herbicide Combinations. *Weeds,* 1967, vol. 15, 20-22